# EUROPÄISCHE PATENTANMELDUNG

(11) **EP 3 292 948 A1**
(43) Veröffentlichungstag der Anmeldung: **14.03.2018**
(21) Anmeldenummer: 17183721.4
(22) Anmeldetag: 28.07.2017
(51) Int. Cl.: B23Q 1/01, B23Q 1/62

(54) **WERKZEUGMASCHINE**

(30) Priorität: 07.09.2016 DE 202016104937 U
(71) Anmelder: MATEC GmbH, 73257 Köngen (DE)
(72) Erfinder: OTTENWÄLDER, Adalbert, 73463 Westhausen (DE); LENTE, Stefan, 73732 Esslingen (DE)
(74) Vertreter: Manitz Finsterwald Patentanwälte PartmbB

(57) **Zusammenfassung**

Die Erfindung betrifft eine Werkzeugmaschine mit einem in einer ersten Richtung verfahrbaren ersten Schlitten, einem von dem ersten Schlitten getragenen zweiten Schlitten, welcher in einer zur ersten Richtung rechtwinkligen zweiten Richtung verfahrbar ist, und einem von dem zweiten Schlitten getragenen dritten Schlitten, welcher in einer zur ersten und zweiten Richtung rechtwinkligen dritten Richtung verfahrbar ist, wobei der erste Schlitten zwei parallel beabstandete und in der zweiten Richtung verlaufende Schienen ausbildet und wobei der zweite Schlitten zwei auf den Schienen geführte Stützen ausbildet, welche derart seitlich an dem zweiten Schlitten angeordnet sind, dass sich der zweite Schlitten teilweise zwischen den Schienen erstreckt.

## Beschreibung

Die vorliegende Erfindung betrifft eine Werkzeugmaschine mit einem in einer ersten Richtung verfahrbaren ersten Schlitten, einem von dem ersten Schlitten getragenen zweiten Schlitten, welcher in einer zur ersten Richtung rechtwinkligen zweiten Richtung verfahrbar ist, und einem von dem zweiten Schlitten getragenen dritten Schlitten, welcher in einer zur ersten und zweiten Richtung rechtwinkligen dritten Richtung verfahrbar ist, wobei der erste Schlitten zwei parallel beabstandete und in der zweiten Richtung verlaufende Schienen ausbildet und wobei der zweite Schlitten zwei auf den Schienen geführte Stützen aufweist.

Eine Werkzeugmaschine dieser Art ist grundsätzlich bekannt und wird auch als Fahrständermaschine bezeichnet. Bei einer solchen Fahrständermaschine verlaufen die sich in der zweiten Richtung erstreckenden Schienen üblicherweise unterhalb des zweiten Schlittens, d.h. der zweite Schlitten baut auf den sich in der zweiten Richtung erstreckenden Schienen auf.

Der Erfindung liegt die Aufgabe zugrunde, eine Werkzeugmaschine der eingangs genannten Art zu schaffen, welche sich durch eine höhere Stabilität, Zerspanungsleistung und Genauigkeit auszeichnet.

Die Aufgabe wird durch eine Werkzeugmaschine mit den Merkmalen des Anspruchs 1 und insbesondere dadurch gelöst, dass die Stützen des zweiten Schlittens, welche auf den sich in der zweiten Richtung erstreckenden Schienen des ersten Schlittens geführt sind, derart seitlich an dem zweiten Schlitten angeordnet sind, dass sich der zweite Schlitten teilweise zwischen den Schienen erstreckt.

Der Erfindung liegt der allgemeine Gedanke zugrunde, den zweiten Schlitten, welcher oft auch als Fahrständer oder kurz Ständer bezeichnet wird, anders als bei herkömmlichen Fahrständermaschinen nicht einfach oben auf den ersten Schlitten aufzusetzen, sondern gewissermaßen abzusenken und in den ersten Schlitten eintauchen zu lassen. Hierfür werden die sich in der zweiten Richtung erstreckenden Schienen des ersten Schlittens nach außen verlagert und entsprechend auch die Stützen des zweiten Schlittens an den Außenseiten des zweiten Schlittens angeordnet, sodass sich diese gewissermaßen als seitliche Schultern auf den Schienen abstützen. Dieses Tieferlegen des zweiten Schlittens trägt zu einer höheren Steifigkeit der Werkzeugmaschine bei und reduziert mögliche Angriffshebel für Momente.

Vorteilhafte Ausbildungen der Erfindung sind den Unteransprüchen, der Beschreibung und der Zeichnung zu entnehmen.

Gemäß einer Ausführungsform erstrecken sich in der dritten Richtung gesehen 15 % bis 60 % und insbesondere 25 % bis 50 % des zweiten Schlittens unterhalb von Oberseiten der Schienen.

Mit anderen Worten sind die Stützen bevorzugt auf einer Höhe von 15 % bis 60 % und insbesondere 25 % bis 50 % der Gesamthöhe des zweiten Schlittens an diesem angeordnet sind.

Gemäß einer weiteren Ausführungsform handelt es sich bei der ersten Richtung um eine X-Richtung, bei der zweiten Richtung um eine Y-Richtung und bei der dritten Richtung um eine Z-Richtung. In Übereinstimmung mit der auf dem Fachgebiet übliche Nomenklatur spannen die X-Richtung und die Y-Richtung bevorzugt eine horizontale Ebene auf, während sich die Z-Richtung vertikal erstreckt.

Für die gewünschte Materialbearbeitung in der Werkzeugmaschine ist vorteilhafterweise ein Werkzeug bzw. Werkzeugträger oder ein Werkstück bzw. Werkstückträger von dem dritten Schlitten aufgenommen.

Zur Schaffung eines größeren Freiheitsgrads bei der Bearbeitung eines Werkstücks in der Werkzeugmaschine ist das Werkzeug bzw. der Werkzeugträger oder das Werkstück bzw. der Werkstückträger um mindestens eine rotatorische Achse drehbar an dem dritten Schlitten gelagert.

Nachfolgend wird die Erfindung rein beispielhaft anhand einer möglichen Ausführungsform unter Bezugnahme auf die beigefügte Zeichnung beschrieben.

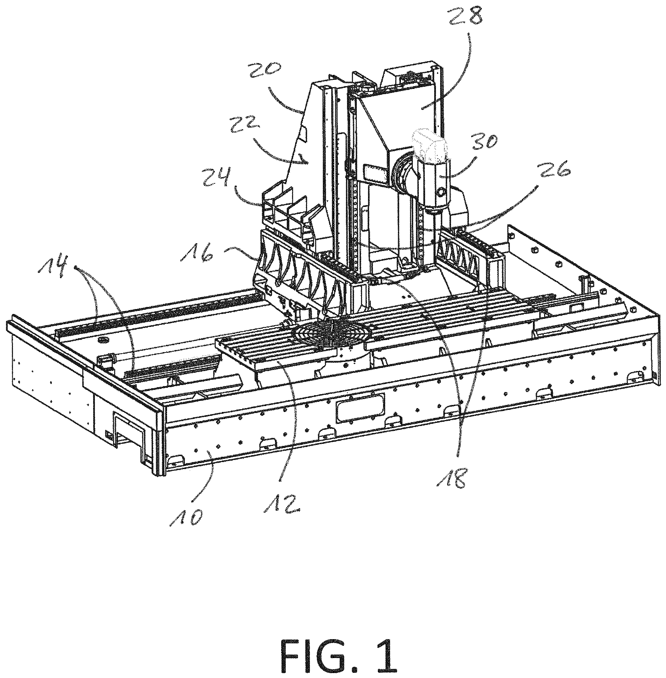

- Fig. 1: zeigt eine perspektivische Ansicht einer erfindungsgemäßen Werkzeugmaschine.

Die in Fig. 1 dargestellte Werkzeugmaschine umfasst ein Maschinengestell 10, in welchem ein Werkstücktisch 12 eingespannt ist. In dem Maschinengestell 10 ist ferner ein Paar von parallel beabstandeten ersten Schienen 14 ausgebildet, welche sich in einer horizontal verlaufenden X-Richtung erstrecken.

Die ersten Schienen 14 tragen einen ersten Schlitten 16, einen sogenannten X-Schlitten, welcher auf den ersten Schienen 14 in X-Richtung verfahrbar geführt ist. Der erste Schlitten 16 bildet ein Paar von parallel beabstandeten zweiten Schienen 18 aus, welche sich rechtwinklig zu den ersten Schienen 14 in einer horizontal verlaufenden Y-Richtung erstrecken.

Die zweiten Schienen 18 bilden eine Y-Führung für einen zweiten Schlitten 20, auch Fahrständer oder kurz Ständer genannt, welcher auf den zweiten Schienen 18 in Y-Richtung verfahrbar gelagert ist. Der zweite Schlitten 20 weist zwei gegenüberliegende Außenseiten 22 auf, die sich jeweils senkrecht zur X-Richtung erstrecken und deren Abstand zueinander an den Abstand zwischen den zweiten Schienen 18 angepasst ist. An jeder Außenseite 22 ist eine schulterförmige seitliche Stütze 24 ausgebildet, mittels welchen sich der zweite Schlitten 20 auf den zweiten Schienen 18 abstützt. Die Stützen 24 sind dabei in einer zur X- und Y-Richtung rechtwinkligen Z-Richtung gesehen auf einer Höhe von etwa einem Viertel der Gesamthöhe des zweiten Schlittens 20 angeordnet, so dass sich etwa ein Viertel des zweiten Schlittens 20 zwischen den zweiten Schienen 18 erstreckt, gewissermaßen also in den ersten Schlitten 16 eintaucht.

Der zweite Schlitten 20 bildet seinerseits ein Paar von dritten Schienen 26, welche sich in der zur X- und Y-Richtung rechtwinkligen Z-Richtung, im vorliegenden Ausführungsbeispiel also vertikal, erstrecken. Die dritten Schienen 26 dienen zur Führung eines an dem zweiten Schlitten 20 in Z-Richtung verfahrbar gelagerten dritten Schlittens 28, eines sogenannten Z-Schlittens. Der dritte Schlitten 28 nimmt einen Werkzeugträger 30 auf, welcher um mindestens eine rotatorische Achse drehbar gelagert ist, im vorliegenden Ausführungsbeispiel um eine B-Achse, welche sich in Y-Richtung erstreckt.

### Bezugszeichenliste

- 10: Maschinengestell
- 12: Werkstücktisch
- 14: erstes Schienenpaar
- 16: erster Schlitten
- 18: zweites Schienenpaar
- 20: zweiter Schlitten
- 22: Außenseite
- 24: seitliche Stütze
- 26: drittes Schienenpaar
- 28: dritter Schlitten
- 30: Werkzeugträger

## Patentansprüche

1. Werkzeugmaschine mit einem in einer ersten Richtung verfahrbaren ersten Schlitten (16), einem von dem ersten Schlitten (16) getragenen zweiten Schlitten (20), welcher in einer zur ersten Richtung rechtwinkligen zweiten Richtung verfahrbar ist, und einem von dem zweiten Schlitten (20) getragenen dritten Schlitten (28), welcher in einer zur ersten und zweiten Richtung rechtwinkligen dritten Richtung verfahrbar ist, wobei der erste Schlitten (16) zwei parallel beabstandete und in der zweiten Richtung verlaufende Schienen (18) ausbildet und wobei der zweite Schlitten (20) zwei auf den Schienen (18) geführte Stützen (24) ausbildet, welche derart seitlich an dem zweiten Schlitten (20) angeordnet sind, dass sich der zweite Schlitten (20) teilweise zwischen den Schienen (18) erstreckt.

2. Werkzeugmaschine nach Anspruch 1,
**dadurch gekennzeichnet, dass**
sich in der dritten Richtung gesehen 15 % bis 60 % und insbesondere 25 % bis 50 % des zweiten Schlittens (20) unterhalb von Oberseiten der Schienen (18) erstrecken.

3. Werkzeugmaschine nach Anspruch 1 oder 2,
**dadurch gekennzeichnet, dass**
die Stützen (24) auf einer Höhe von 15 % bis 60 % und insbesondere 25 % bis 50 % der Gesamthöhe des zweiten Schlittens (20) an diesem angeordnet sind.

4. Werkzeugmaschine nach zumindest einem der vorstehenden Ansprüche,
**dadurch gekennzeichnet, dass**
die erste Richtung eine X-Richtung, die zweite Richtung eine Y-Richtung und die dritte Richtung eine Z-Richtung ist.

5. Werkzeugmaschine nach zumindest einem der vorstehenden Ansprüche,
**dadurch gekennzeichnet, dass**
ein Werkzeug bzw. Werkzeugträger oder ein Werkstück bzw. Werkstückträger von dem dritten Schlitten (28) aufgenommen ist.

6. Werkzeugmaschine nach Anspruch 5,
**dadurch gekennzeichnet, dass**
das Werkzeug bzw. der Werkzeugträger (30) oder das Werkstück bzw. der Werkstückträger um mindestens eine rotatorische Achse drehbar an dem dritten Schlitten (28) gelagert ist.

7. Werkzeugmaschine nach zumindest einem der vorstehenden Ansprüche,
**dadurch gekennzeichnet, dass**
sie eine Fahrständermaschine ist.
